# EUROPEAN PATENT SPECIFICATION

(11) **EP 3 219 515 B1**
(45) Date of publication and mention of the grant of the patent: **01.08.2018**
(21) Application number: 17158581.3
(22) Date of filing: 01.03.2017
(51) Int. Cl.: B60C 13/00, B60C 13/02

(54) **PNEUMATIC TIRE**
LUFTREIFEN
PNEUMATIQUE

(30) Priority: 14.03.2016 JP 2016049994
(43) Date of publication of application: 20.09.2017
(73) Proprietor: Sumitomo Rubber Industries, Ltd., Kobe-shi, Hyogo-ken (JP)
(72) Inventor: SATAKE, Madoka, Kobe-shi Hyogo 651-0072 (JP)
(74) Representative: Manitz Finsterwald Patentanwälte PartmbB

(56) References cited:
- BE-A1- 604 511
- FR-E- 83 303
- JP-A- 2004 291 937

## Description

### Technical field

The present invention relates to a pneumatic tire, more particularly to a protector for the tire sidewall portion capable of improving the cut resistance when driving in rocky terrain without sacrificing the traction performance of the tire. The features of the preamble part of the independent claim are known from JP 2004 291937 A. Related technology is known from FR 83 303 E.

### Background art

In the vehicles having the opportunity for traveling in rocky terrain such as four-wheel drive vehicles, the tires are required to exert sufficient traction performance when traveling in rocky terrain (such performance may be referred to as "rock performance").

In Japanese Patent Application Publication No. 2004-291936, there is disclosed a tire provided in the sidewall portion with a side protector to improve the rock performance, wherein the side protector is composed of a rows of blocks protruding from the outer surface of the sidewall portion and arranged in the tire circumferential direction at intervals. In such tire, as the blocks are arranged at intervals, rubber parts of the sidewall portion formed between the blocks become relatively thin, therefore when such thin rubber part is hit by a pointed or sharp rock, etc., there is a possibility that a cut damage/breakage occurs. Thus, there is room for improvement in the cut resistance performance.

### Summary of the Invention

It is therefore, an object of the present invention to provide a pneumatic tire in which the cut resistance performance is improved without sacrificing the rock performance.

According to the present invention, as defined in the independent claim, a pneumatic tire comprises a sidewall portion provided in its upper sidewall region, which is defined as being radially outside a maximum tire width position, with a side protector protruding from a contour line S of the sidewall portion, wherein
the side protector comprises first protector blocks circumferentially arranged at intervals, and second protector ribs each connecting between two of the circumferentially adjacent first protector blocks,
each of the second protector ribs has a substantially triangular cross-sectional shape in a tire meridian section including the second protector rib, wherein
the triangular cross-sectional shape has an apex at which the protruding height of the second protector rib from the contour line S is maximum, a radially outer oblique side extending radially outwardly from the apex to merge into the contour line S, and a radially inner oblique side extending radially inwardly from the apex to merge into the contour line S, wherein the radially outer oblique side is a concave circular arc whose center is positioned outside the tire and which has a radius of curvature Ro, and
the radially inner oblique side is a concave circular arc whose center is positioned outside the tire and which has a radius Ri of curvature.

In the pneumatic tire according to the present invention, the protruding height H2 of the second protector rib from the contour line S at the apex is different from the protruding height H1 of the first protector block from the contour line S.

The protruding height H2 is smaller than the protruding height H1.
The protruding height H2 is 0.4 to 0.7 times the protruding height H1.

In the pneumatic tire according to the present invention, a radial length Li of the radially inner oblique side measured along the contour line S is larger than a radial length Lo of the radially outer oblique side measured along the contour line S.

In the pneumatic tire according to the present invention, it is preferable that the radius Ri of curvature is greater than the radius Ro of curvature.

### Brief Description of the Drawings

Fig. 1 is a cross sectional partial view of a pneumatic tire as an embodiment of the present invention.
Fig. 2 is a partial side view thereof showing the side protector.
Fig. 3 is an enlarged cross-sectional view of the side protector.
Fig. 4 is a cross-sectional view showing a positional relationship between the apex of the second protector rib and a split surface of a tire vulcanization mold M.
Fig. 5 is a partial side view showing another example of the first protector block.

### Description of the Preferred Embodiments

Embodiments of present invention will now be described in detail in conjunction with accompanying drawings.

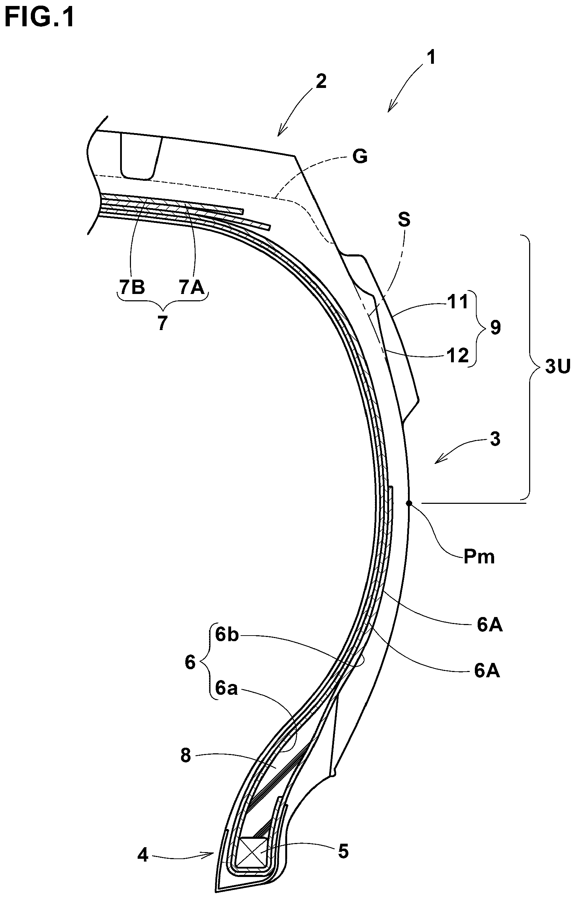

As shown in Fig. 1, a pneumatic tire 1 as an embodiment of present invention comprises a tread portion 2, a pair of axially spaced bead portions 4 each with a bead core 5 therein, a pair of sidewall portions 3 extending between the tread edges and the bead portions 4, and reinforcing cord layers which include a carcass 6 extending between the bead portions 4 through the tread portion 2 and the sidewall portions 3, and a belt disposed radially outside the carcass 6 in the tread portion 2.

The carcass 6 is composed of at least one ply 6A (in this embodiment two plies) of carcass cords arranged at an angle of from 70 to 90 degrees with respect to the tire circumferential direction. In the carcass 6 in this embodiment, each carcass ply 6A extends between the bead portions 4 through the tread portion 2 and the sidewall portions 3 and is turned up around the bead core 5 in each of the bead portions 4 so as to form a pair of turned up portions 6b and a toroidal main portion 6a extending therebetween.

The bead portions 4 in this embodiment are each provided between the turned up portion 6b and the main portion 6a with a bead apex rubber 8 extending radially outwardly from the bead core 5 to reinforce the bead portion 4.

The belt 7 comprises at least one ply (in this example two cross plies 7A and 7B) of cords laid at an angle of from 10 to 45 degrees with respect to the tire circumferential direction to reinforce the tread portion 2.

Incidentally, the structures of the carcass 6 and belt 7 are not limited to the above.

According to the present invention, at least one of (in this embodiment each of the sidewall portions 3) is provided in its upper sidewall region 3U with a side protector 9 protruding from the contour line S of the sidewall portion 3. Here, the upper sidewall region 3u is a region of the sidewall portion 3 defined as being radially outside a maximum tire width position Pm.
The contour line S is a smooth curve defined by the outer surface of the sidewall portion 3 excluding partially formed irregularities, e.g., ornamental serrations, ribs for presenting marks, protector, etc.
The maximum tire width position Pm is the mostly axially outwardly projecting position on the contour line S. But, instead of the maximum tire width position Pm in the tire radial direction, the maximum cross-sectional width position in the tire radial direction, of the carcass can be used. It may be possible that a part of the side protector 9 protrudes radially inwardly beyond the maximum tire width position Pm.

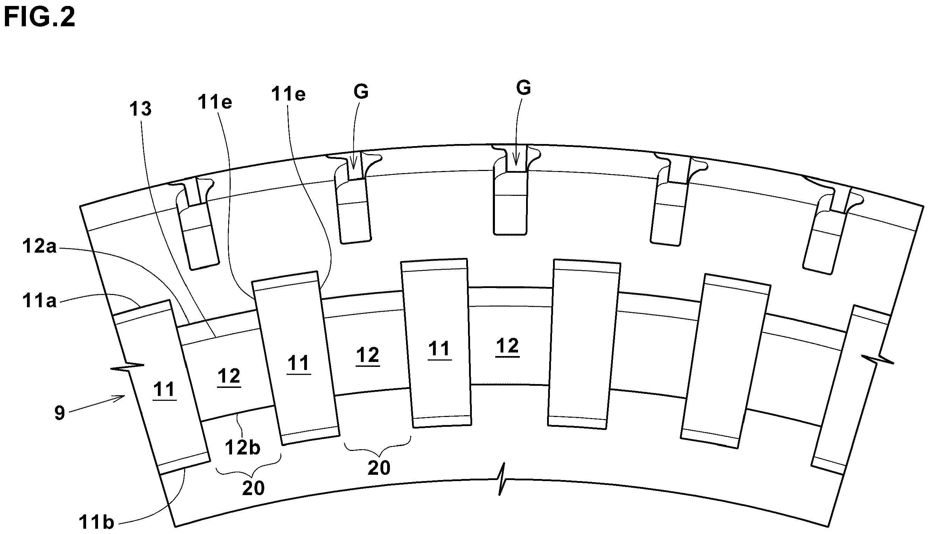

As shown in Fig. 2, the side protector 9 comprises first protector blocks 11 arraigned in the tire circumferential direction at intervals, and second protector ribs 12 each extending between two of the circumferentially adjacent first protector blocks 11 to connect therebetween.

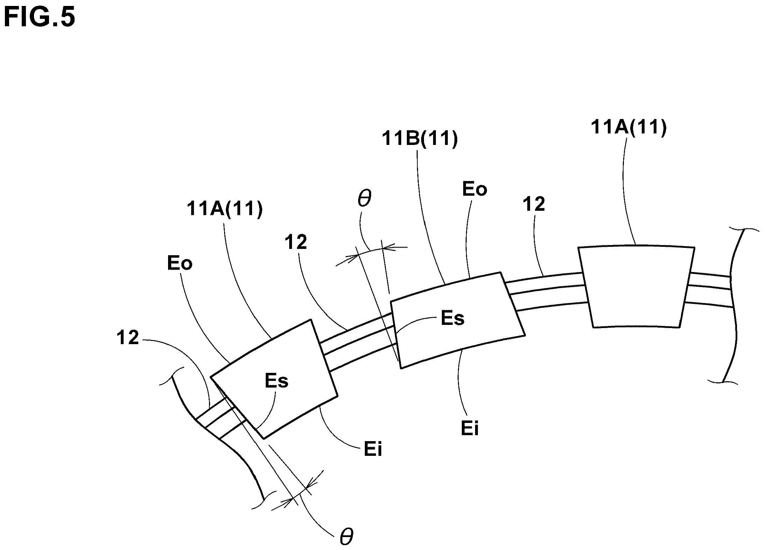

The first protector block 11 in this example has a rectangular shape as shown Fig. 2. But, it not limited thereto, and various shapes can be employed, for example as shown in Fig. 5 described later.

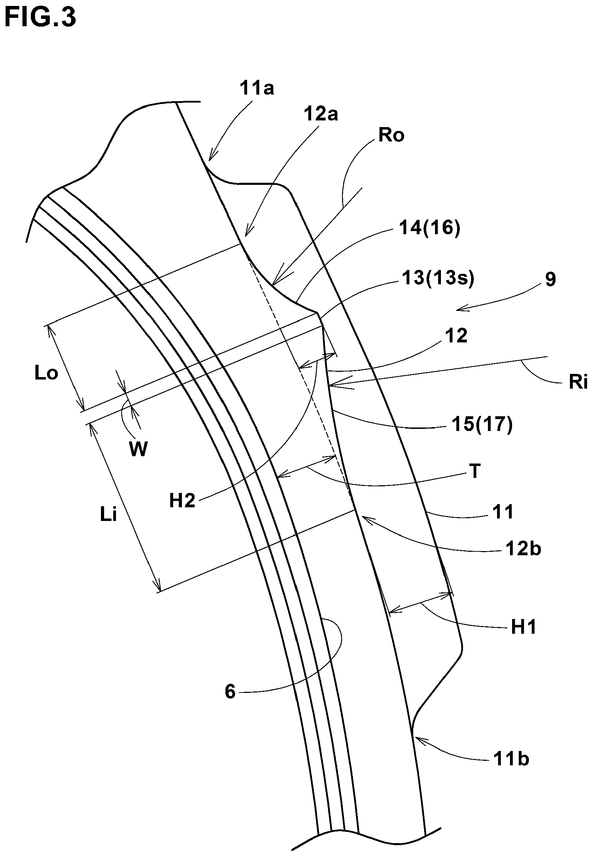

In a tire meridian section, as shown in Fig. 3, the protruding height H1 of the first protector block 11 from the contour line S is substantially constant, whereas the protruding height of the second protector rib 12 is varied and has a substantially triangular cross-sectional shape of which triangular shape has an apex 13 at which the protruding height from the contour line S is a maximum H2, a radially outer oblique side 14 extending radially outwardly from the apex 13, and a radially inner oblique side 15 extending radially inwardly from the apex 13.

In this embodiment, the apex 13 of the triangular shape is truncated by a surface 13s substantially parallel with the contour line S in order to suppress rubber chipping at the apex 13. Preferably, the width w in the tire radial direction of the truncated surface 13s is 2.0 mm or less. However, it is also possible that the apex 13 may be formed, without being truncated, in the form of a sharp edge at which the inner and outer oblique sides 14 and 15 directly intersect with each other.

The radially outer oblique side 14 is a concave circular arc 16 having a radius Ro of curvature with its center outside the tire, and merged into the contour line S.

The radially inner oblique side 15 is a concave circular arc 17 having a radius Ri of curvature with its center outside the tire, and merged into the contour line S.

when traveling on a rocky ground surface, the side protector 9 can grip rocks on the ground between the first protector blocks 11 and further the side edges 11e (shown in Fig. 2) of the first protector blocks 11 can contact strongly with the rocks. Thus, the side protector 9 can exert excellent rock performance.

Further, owing to the second protector ribs 12 of the side protector 9, a rubber thickness measured from the carcass 6 can be secured in the recessed parts 20 (shown in Fig. 2) formed between the first protector blocks 11. Therefore, it is possible to mitigate shock upon impact with the rocks and to improve the cut resistance.
Furthermore, as the second protector rib 12 has a substantially triangular cross-sectional shape, it is possible to reduce the rubber volume of the second protector rib 12 while securing the rubber thickness of the recessed part 20. Thus, the heat accumulation is reduced, and the deterioration of the durability due to the temperature rise can be prevented.

Moreover, since the radially outer and inner oblique sides 14 and 15 of the second protector rib 12 are formed by the concave circular arcs 17 and 16, as compared with the oblique sides 15 and 14 each formed by a straight line, the rubber volume of the second protector rib 12 can be further decreased, and the heat accumulation is further reduced and the heat radiation is enhanced by the increased surface area. Thus, the prevention of the deterioration of the durability can be assured. Since the second protector rib 12 has a substantially triangular cross-sectional shape, and the inner and outer oblique side 15 and 14 are formed by the concave circular arcs, as compared with the oblique sides 15 and 14 each formed by a straight line, the flexibility of the sidewall portion 3 can be optimized in the tire radial direction, and the tire can be improved in vibration characteristics and ride comfort performance.

In order to suppress an increase in the rubber volume while maintaining cut resistance, it is preferred that the radially outer edges 12a of the second protector ribs 12 are positioned radially inside the radially outer edges 11a of the first protector blocks 11, and the radially inner edges 12b of the second protector ribs 12 are positioned radially outside the radially inner edges 11b of the first protector blocks 11.

It is preferable that the protruding height H2 of the second protector rib 12 from the contour line S measured at the apex 13 is different from the protruding height H1 of the first protector block 11 from the contour line S.
Particularly, it is preferable that the protruding height H2 is smaller than the protruding height H1. More preferably, the protruding height H2 is in a range from 0.4 to 0.7 times of the protruding height H1. In other words, the second protector rib 12 is as shown in Fig. 3 entirely positioned inside the outer surface of the first protector block 11. If H2 >= H1, the second protector ribs 12 tend to adversely affect the rock performance and the flexibility in the tire radial direction, and further, tend to cause an unnecessary increase in the rubber volume. It is therefore, preferred that the protruding height H2 of the second protector ribs 12 is set in a range of not more than 0.7 times the protruding height H1 of the first protector blocks 11 from the points of view of the rock performance, the flexibility in the tire radial direction and the rubber volume. Further, in order to improve the cut resistance performance, it is preferred that the protruding height H2 of the second protector ribs 12 is set in a range of not less than 0.4 times the protruding height H1 of the first protector blocks 11. In this embodiment, it is preferable that the protruding height H1 is a range of from 4 to 9 mm from the point of view of the rock performance.

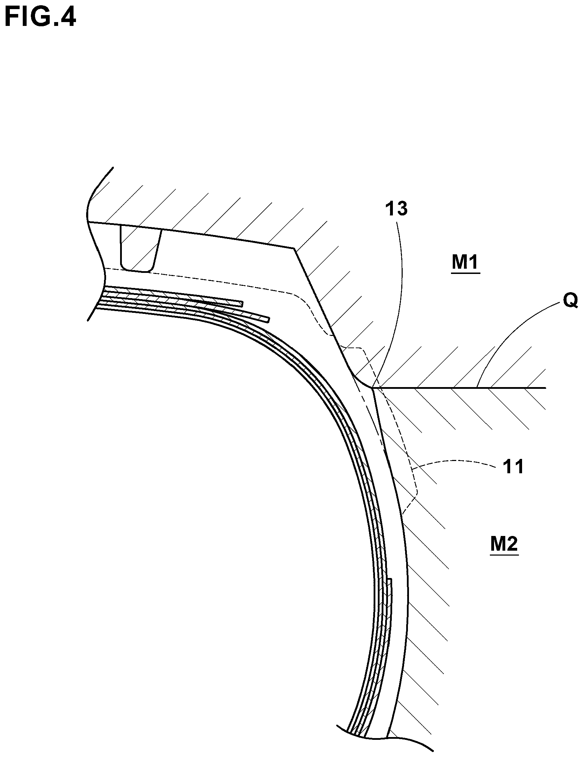

When the tire is to be vulcanization molded by the use of a tire vulcanizing mold comprising a tread mold M1 (a mold part for molding the tread portion 2) and a side mold M2 (a mold part for molding the sidewall portion 3), it is preferred that, as shown in Fig. 4, the apexes 13 of the second protector ribs 12 are formed at a radial position Q corresponding to that of a split surface between the tread mold M1 and the side mold M2. Thereby, the second protector rib 12 having a substantially triangular cross-sectional shape can be easily vulcanization molded without causing undercut.
Incidentally, in the vulcanised tire, whether the apexes 13 are formed at the position Q of the split surface can be determined based on the position of linear marks occurring on the outer surfaces of the first protector blocks 11.

Further, as shown in Fig. 3, a rubber thickness T from the carcass 6 to the contour line S is usually smaller on the radially inside of the apex 13 than on the radially outside of the apex 13, therefore, the cut damage is usually likely to occur on the radially inside of the apex 13. In this embodiment, therefore, in order to improve the cut resistance performance, a radial length Li of the radially inner oblique side 15 measured along the contour line S is set to be larger than a radial length Lo of the radially outer oblique side 14 measured along the contour line S. This relative magnitude relation between the radial length Li and the radial length Lo also comes into existence when measured along the tire radial direction. Further, for the same reason, the radius Ri of curvature of the radially inner oblique side 15 is set to be larger than the radius Ro of curvature of the radially outer oblique side 14 so as to improve the cut resistance performance. Preferably, the radius ratio Ro/Ri is set in a range from 0.1 to 0.7.

The tread portion 2 is provided with shoulder lateral grooves G opened at the tread edge as shown in Fig. 2. The first protector blocks 11 of the side protector 9 are preferably arranged at the same circumferential pitches as those of the shoulder lateral grooves G so as to alternate with the openings of the shoulder lateral grooves G.

As to the shape of the first protector block 11, aside from a rectangular shape, a trapezoidal shape may be employed. Fig. 5 shows an example of the arrangement of such trapezoidal first protector blocks 11. In this example, two types of first protector blocks 11 (11A and 11B) are arranged alternately in the tire circumferential direction. In the first protector block 11A, the radially outer side Eo (=long base) is parallel with and longer than the radially inner side Ei (=short base). In the first protector block 11B, the radially outer side Eo (=short base) is parallel with and shorter than the radially inner side Ei (=long base).
In the trapezoidal first protector blocks 11A and 11B, the angles θ of the lateral sides Es (legs) with respect to a tire radial direction are preferably set in a range of not more than 15 degrees, more preferably not more than 10 degrees from the point of view of the rock performance.

while detailed description has been made of a preferable embodiment of the present invention, the present invention can be embodied in various forms without being limited to the illustrated embodiment.

### Comparison tests

In order to confirm the effect of the present invention, pneumatic tires of size LT265x70R17 (rim size 17x7.5) for four-wheel drive vehicles such as SUV were experimentally manufactured as test tires and tested for the rock performance, cut resistance performance, heat accumulation performance, and ride comfort performance. The test tires had the same structure except for the side protectors whose specifications are shown in Table 1.

### < Rock performance >

Using a 2500cc four-wheel-drive car provided on all of the four wheels with test tires (tire pressure 100 kPa), a test driver evaluated the traction performance (rock performance) during running on a rocky ground surface of a test course including rocky mountain terrain.

The results are indicated in Table 1 by an index based on Comparative example 1 being 100, wherein the larger the numerical value, the better the rock performance.

### < Cut resistance performance >

After running on the above-mentioned rocky ground surface for about 50 kilometers, the sidewall portion of the test tire was visually checked for cuts occurred in the recessed parts between the first protector blocks and evaluated comprehensively. The results are indicated in Table 1 by an index based on Comparative Example 1 being 100, wherein the larger the numerical value, the better the cut resistance performance.

### < Ride comfort performance >

The test driver evaluated the ride comfort when traveling on the above-mentioned rocky ground surface.

The results are indicated in Table 1 by an index based on Comparative example 1 being 100, wherein the larger the numerical value, the better the ride comfort performance.

### < Heat accumulation performance >

Using a tire test drum, each test tire was run for 24 hours (speed 100 kilometer/hour, tire pressure 550 kPa, tire load 14.22 kN) and then the surface temperature of the second protector ribs was measured.

The results are indicated in Table 1 by an index based on Comparative Example 1 being 100, wherein the larger the numerical value, the lower the temperature, namely, the better the performance.

**Table 1**

| Tire | Comp. example 1 | Comp. example 2 | Comp. example 3 | Working example 1 | Working example 2 | Working example 3 | Working example 4 | Working example 5 | Working example 6 | Comp. example 4 |
|---|---|---|---|---|---|---|---|---|---|---|
| first protector block | present | | | | | | | | | |
| height H1 (mm) | 6.0 | | | | | | | | | |
| second protector rib | absent | present | | | | | | | | |
| cross-sectional shape | -- | triangle | | | | | | | | rectangle |
| height H2 (mm) | -- | 3.0 | 6.0 | 1.8 | 2.4 | 3.0 | 4.2 | 6.0 | 3.0 | 3.0 |
| ratio H2/H1 | -- | 0.5 | 1 | 0.3 | 0.4 | 0.5 | 0.7 | 1 | 0.5 | 0.5 |
| outer oblique side | -- | straight | straight | concave arc | concave arc | concave arc | concave arc | concave arc | concave arc | -- |
| radius Ro of curvature (mm) | -- | -- | -- | 10 | 10 | 10 | 10 | 9.6 | 50 | -- |
| inner oblique side | -- | straight | straight | concave arc | concave arc | concave arc | concave arc | concave arc | concave arc | -- |
| radius Ri of curvature (mm) | -- | -- | -- | 50 | 50 | 50 | 50 | 45 | 10 | -- |
| length Lo (mm) | -- | 7 | | | | | | | 14 | 7 |
| length Li (mm) | -- | 14 | | | | | | | 7 | 14 |
| rock performance | 100 | 95 | 80 | 100 | 98 | 95 | 90 | 80 | 95 | 70 |
| cut resistance | 100 | 150 | 200 | 135 | 140 | 150 | 170 | 200 | 135 | 170 |
| ride comfort | 100 | 50 | 40 | 80 | 70 | 60 | 55 | 50 | 60 | 30 |
| heat accumulation | 100 | 80 | 40 | 98 | 95 | 90 | 75 | 45 | 90 | 20 |

From the test results, it was confirmed that, according to the present invention, the cut resistance performance can be improved while maintaining the rock performance.

### Description of the reference signs

- 1: pneumatic tire
- 3: sidewall portion
- 3U: upper sidewall region
- 9: side protector
- 11: first protector block
- 12: second protector rib
- 13: apex
- 14: radially outer oblique side
- 15: radially inner oblique side
- 16: concave circular arc
- 17: concave circular arc
- Pm: maximum tire width position
- S: contour line

## Claims

1. A pneumatic tire (1) comprising
a sidewall portion (3) provided in its upper sidewall region (3u) radially outside a maximum tire width position (Pm) with a side protector (9) protruding from a contour line (S) of the sidewall portion (3),
wherein
the side protector (9) comprises first protector blocks (11) circumferentially arranged at intervals, and second protector ribs (12) each connecting between two of the circumferentially adjacent first protector blocks (11),
each of the second protector ribs (12) has a substantially triangular cross-sectional shape in a tire meridian section including the second protector rib (12), wherein
the triangular cross-sectional shape has an apex (13) at which a protruding height (H2) of the second protector rib (12) from the contour line (S) is maximum, a radially outer oblique side (14) extending radially outwardly from the apex (13) to merge into the contour line (S), and a radially inner oblique side (15) extending radially inwardly from the apex (13) to merge into the contour line (S),
the radially outer oblique side (14) is a concave circular arc (16) whose center is positioned outside the tire (1) and which has a radius of curvature Ro, and
the radially inner oblique side (15) is a concave circular arc (17) whose center is positioned outside the tire (1) and which has a radius Ri of curvature,
wherein a protruding height H2 of the second protector rib (12) from the contour line (S) at the apex (13) differs from a protruding height H1 of the first protector block (11) from the contour line (S)
wherein the protruding height H2 is 0.4 to 0.7 times the protruding height H1,
**characterized in that**
a radial length (Li) of the radially inner oblique side (15) measured along the contour line (S) is larger than a radial length (Lo) of the radially outer oblique side (14) measured along the contour line (S).

2. The pneumatic tire according to claim 1, wherein the radius Ri of curvature of the radially inner oblique side (15) is greater than the radius Ro of curvature of the radially outer oblique side (14).

3. The pneumatic tire according to claim 2, wherein a ratio of the radius Ro of curvature of the radially outer oblique side (14) to the radius Ri of curvature of the radially inner oblique side (15) is in a range from 0.1 to 0.7.

## Patentansprüche

1. Luftreifen (1), umfassend
einen Seitenwandabschnitt (3), der in seinem oberen Seitenwandbereich (3U) radial außerhalb einer Position (Pm) maximaler Reifenbreite mit einem Seitenprotektor (9) versehen ist, der von einer Konturlinie (S) des Seitenwandabschnitts (3) vorsteht,
wobei
der Seitenprotektor (9) erste Protektorblöcke (11), die in Umfangsrichtung in Intervallen angeordnet sind, und zweite Protektorrippen (12), die jeweils eine Verbindung zwischen zweien der in Umfangsrichtung benachbarten ersten Protektorblöcke (11) herstellen, umfasst,
eine jede der zweiten Protektorrippen (12) eine im Wesentlichen dreieckige Querschnittsform in einem Meridianquerschnitt des Reifens, der die zweite Protektorrippe (12) umfasst, aufweist,
wobei
die dreieckige Querschnittsform einen Scheitel (13), an welchem eine Vorstandshöhe (H2) der zweiten Protektorrippe (12) von der Konturlinie (S) maximal ist, eine radial äußere schräge Seite (14), die sich dem Scheitel (13) derart radial nach außen erstreckt, dass sie in die Konturlinie (S) übergeht, und eine radial innere schräge Seite (15) aufweist, die sich von dem Scheitel (13) derart radial nach innen erstreckt, dass sie in die Konturlinie (S) übergeht,
die radial äußere schräge Seite (14) ein konkaver Kreisbogen (16) ist, dessen Zentrum außerhalb des Reifens (1) angeordnet ist und der einen Krümmungsradius Ro aufweist, und
die radial innere schräge Seite (15) ein konkaver Kreisbogen (17) ist, dessen Zentrum außerhalb des Reifens (1) angeordnet ist und der einen Krümmungsradius Ri aufweist,
wobei eine Vorstandshöhe H2 der zweiten Protektorrippe (12) von der Konturlinie (S) an den Scheitel (13) sich von einer Vorstandshöhe H1 des ersten Protektorblocks (11) von der Konturlinie (S) unterscheidet,
wobei die Vorstandshöhe H2 das 0,4- bis 0,7-fache der Vorstandshöhe H1 beträgt,
**dadurch gekennzeichnet, dass**
eine radiale Länge (Li) der radial inneren schrägen Seite (15), entlang der Konturlinie (S) gemessen, größer ist als eine radiale Länge (Lo) der radial äußeren schrägen Seite (14), entlang der Konturlinie (S) gemessen.

2. Luftreifen nach Anspruch 1, wobei der Krümmungsradius Ri der radial inneren schrägen Seite (15) größer ist als der Krümmungsradius Ro der radial äußeren schrägen Seite (14).

3. Luftreifen nach Anspruch 2, wobei ein Verhältnis des Krümmungsradius Ro der radial äußeren schrägen Seite (14) zu dem Krümmungsradius Ri der radial inneren schrägen Seite (15) in einem Bereich von 0,1 bis 0,7 liegt.

## Revendications

1. Bandage pneumatique (1) comprenant :
une portion formant paroi latérale (3) dotée, dans sa région supérieure de paroi latérale (3u) et radialement à l'extérieur d'une position en largeur maximum (Pm) du pneumatique, d'un protecteur latéral (9) qui se projette depuis une ligne de contour (S) de la portion formant paroi latérale (3),
dans lequel
le protecteur latéral (9) comprend des premiers blocs protecteurs (11) agencés circonférentiellement à intervalles, et des secondes nervures protectrices (12) assurant chacune une connexion entre deux des premiers blocs protecteurs circonférentiellement adjacents (11),
chacune des secondes nervures protectrices (12) a une forme de section transversale sensiblement triangulaire dans une section méridienne du pneumatique incluant la seconde nervure protectrice (12),
dans lequel
la forme de section transversale triangulaire présente un sommet (13) auquel une hauteur de projection (H2) de la seconde nervure protectrice (12) depuis la ligne de contour (S) est maximum, un côté oblique radialement extérieur (14) s'étendant radialement vers l'extérieur depuis le sommet (13) pour se fondre dans la ligne de contour (S), et un côté oblique radialement intérieur (15) s'étendant radialement vers l'intérieur depuis le sommet (13) pour se fondre dans la ligne de contour (S),
le côté oblique radialement extérieur (14) est un arc circulaire concave (16) dont le centre est positionné à l'extérieur du pneumatique (1) et qui présente un rayon de courbure Ro, et
le côté oblique radialement intérieur (15) est un arc circulaire concave (17) dont le centre est positionné à l'extérieur du pneumatique (1) et qui présente un rayon de courbure Ri,
dans lequel une hauteur de projection H2 de la seconde nervure protectrice (12) depuis la ligne de contour (S) au sommet (13) diffère d'une hauteur de projection H1 du premier bloc protecteur (11) depuis la ligne de contour (S), dans lequel la hauteur de projection H2 est de 0,4 à 0,7 fois la hauteur de projection H1,
**caractérisé en ce que**
une longueur radiale (Li) du côté oblique radialement intérieur (15), mesurée le long de la ligne de contour (S), et plus grande qu'une longueur radiale (Lo) du côté oblique radialement extérieur (14) mesurée le long de la ligne de contour (S).

2. Bandage pneumatique selon la revendication 1, dans lequel le rayon de courbure Ri du côté oblique radialement intérieur (15) est plus grand que le rayon de courbure Ro du côté oblique radialement extérieur (14).

3. Bandage pneumatique selon la revendication 2, dans lequel un rapport du rayon de courbure Ro du côté oblique radialement extérieur (14) sur le rayon de courbure Ri du côté oblique radialement intérieur (15) est dans une plage de 0,1 à 0,7.
